# FASCICULE DE BREVET EUROPEEN

(11) **EP 0 860 616 B1**
(45) Date de publication et mention de la délivrance du brevet: **09.07.2003**
(21) Numéro de dépôt: 98400412.7
(22) Date de dépôt: 20.02.1998
(51) Int. Cl.: F16B 5/12, F16B 19/10

(54) **Dispositif d'agrafage d'une pièce sur un support**
Befestigungsvorrichtung eines Bauteils auf einem Träger
Fastening device of a piece on a support

(30) Priorité: 21.02.1997 FR 9702071
(43) Date de publication de la demande: 26.08.1998
(73) Titulaire: Eurostyle (S.A.S.), 91370 Verrières le Buisson (FR)
(72) Inventeur: Durand, Jean-Michel, 36120 Etrechet (FR); Boulbon, Jack, 36130 Deols (FR)
(74) Mandataire: Viard, Jean

(56) Documents cités:
- DE-A- 1 778 752
- DE-A- 2 626 081
- FR-A- 1 455 461
- FR-A- 1 572 541
- US-A- 5 542 158

## Description

La présente invention a pour objet un dispositif d'agrafage d'une pièce sur un support, et en particulier d'une pièce élastique en matière plastique sur un support métallique destiné en particulier, mais non exclusivement, à l'industrie automobile.

Il a été décrit dans le brevet français FR-A-2742493 un système de fixation sur un support d'un ensemble comprenant deux pièces, en particulier, de garniture de véhicules automobiles. Ces deux pièces sont assemblées entres elles en ne laissant apparaître extérieurement qu'une ligne de jonction et fixées sur le support aux deux extrémités opposées à la ligne de jonction par des moyens de fixation telles que des vis, le système comprenant des moyens d'agrafage de la première pièce sur le support et des moyens d'agrafage de la deuxième sur la première pièce. Les moyens d'agrafage de la première pièce sur le support comprennent deux pattes internes prévues pour s'encastrer dans deux fentes ou ajours du support. Chaque patte en "V" interne comprend au moins une nervure retenant d'une manière amovible la patte dans la fente correspondante du support. Les moyens d'agrafage de la seconde pièce sur la première pièce comprennent au moins une patte interne rigide solidaire de la partie d'extrémité de la seconde pièce s'étendant perpendiculairement à la paroi externe de celle-ci. Les pattes de la seconde pièce présentent des extrémités sensiblement triangulaires pouvant s'engager à force dans les ouvertures des pattes en "V" internes de la première pièce. La seconde pièce est bloquée, par ailleurs, sur la première et la liaison entre les pattes des deux pièces permet d'assurer un moteur. Ainsi, les pattes de la deuxième pièce bloquent les pattes de la première pièce à l'intérieur du support. Mais les pattes de la seconde pièce ne sont pas bloquées dans la première pièce.

FR-A-1 455 461 décrit un dispositif d'agrafage composé d'un corps en boucle et d'un poussoir qui est solidaire du corps puis en est séparé pour être déplacé à l'intérieur du corps, le corps comprenant des cames en saillie pour déformer le corps lors de l'insertion du poussoir. Le poussoir peut porter des rainures en creux dans lesquelles les cames en saillie viennent s'engager pour verrouiller la partie mâle dans la partie femelle. Ce dispositif ne peut pas être transposé au système de fixation de FR-A-2 742 493 car les nervures des pattes en "V" empêche la déformation de celles-ci.

Dans DE-A-26 26 081, le verrouillage est obtenu par application d'un couple de rotation et d'une pression écartant les côtés de la douille.

La présente invention a pour objet de pallier les inconvénients des fixations connues et de permettre, entre deux pièces, un double pincement ou clipsage, la seconde pièce jouant le rôle de verrou de la première, alors que la première retient par pincement la seconde.

Selon l'invention, l'agrafe de fixation d'une pièce sur un support présentant au moins un ajout, la pièce comprenant au moins des moyens d'agrafage sur le support présentant la forme d'une patte en "V" en saillie vers le bas et présentant une partie d'extrémité en nez, chaque branche du "V" présentant une rainure destinée à entourer le bord de l'ajour formé dans le support, l'agrafe de fixation comprenant des moyens de blocage de la patte dans le support présentant la forme d'une patte, ces moyens comprenant une partie d'extrémité en pointe pour s'engager dans le nez de la patte en "V" (Agrafe du type divulgué dans FR-A-2742493), est caractérisée en ce que les rainures sont proches du nez de la patte en "V", chaque branche du "V" comprenant une excroissance formée vers l'extérieur du "V" relativement plus éloignée du nez que la rainure, les excroissances des deux branches du "V" formant un réceptacle en forme de cupule, l'agrafe de fixation comprenant un verrou de largeur supérieure à la largeur au repos du réceptacle et venant s'engager dans ce réceptacle.

L'invention vise également un dispositif de fixation sur un support d'un ensemble de deux pièces se recouvrant partiellement, comprenant des moyens d'agrafage de la première pièce sur le support et des moyens d'agrafage de la deuxième sur la première, la première pièce comprenant au moins une patte en "V" en saillie vers le bas et présentant une partie d'extrémité en nez, chaque branche du "V" présentant une rainure destinée à entourer le bord de l'ajour forme dans le support, les moyens d'agrafage de la deuxième pièce sur la première pièce présentant la forme d'une patte solidaire de la deuxième pointe venant s'engager dans le nez de la patte en "V" (Dispositif du type divulgué dans FR-A-2742493), qui est caractérisé en ce que les rainures sont proches du nez de la patte en "V", chaque branche du "V" comprenant une excroissance formée vers l'extérieur du "V" relativement plus éloignée du nez que la rainure, les excroissances des deux branches du "V" formant un réceptacle en forme de cupule, l'agrafe de fixation comprenant un verrou de largeur supérieure à la largeur au repos du réceptacle et venant s'engager dans ce réceptacle.

L'intérieur du "V" de la patte de la première pièce présente une entrée tronconique présentant des première et seconde extrémités opposées respectivement relativement plus éloignées et relativement plus proche du nez, le diamètre de la première extrémité étant supérieur au diamètre de la seconde extrémité, et le diamètre de la seconde extrémité étant inférieur à la largeur maximum au repos du réceptacle.

La patte est de forme complémentaire à celle de l'intérieur du "V" de la première pièce, avec des dimensions transversales supérieures.

D'autres caractéristiques et avantages de la présente invention apparaîtront au cours de la description qui va suivre d'un mode particulier de réalisation, donné uniquement à titre d'exemple non limitatif, en regard des figures qui représentent:
- Les figures 1 à 3, une agrafe selon l'invention dans les positions successives de montage ou insertion ;
- la figure 2, une vue éclatée du système de fixation de deux pièces à recouvrement partiel sur un support.

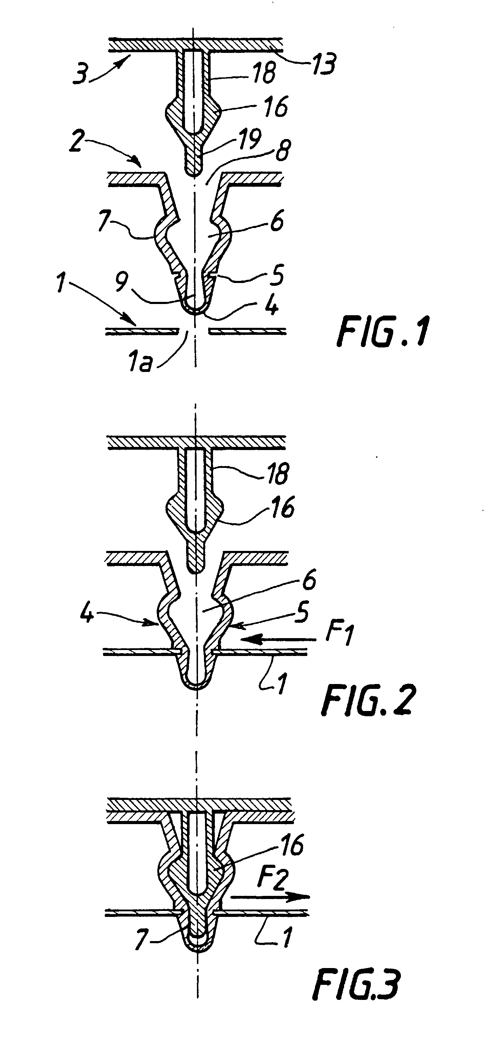

Sur les figures 1 à 3, on distingue de bas en haut, un support métallique 1 percé d'un ajour, fente ou trou la. Au-dessus du support 1, se trouve une agrafe 2 ou patte qui est, de préférence, moulée avec la pièce à fixer sur le support 1. Et au-dessus de l'agrafe 2 se trouve le verrou 3. L'agrafe 2 présente une forme générale en "V", la pointe ou nez 4 du "V" étant légèrement arrondie pour faciliter l'insertion de l'agrafe 2 dans le support 1. Au-dessus de ce nez, on distingue deux rainures 5 dont la profondeur est telle que lors de l'insertion de la pièce 2 dans le support 1, la pointe de l'agrafe 2 soit contrainte latéralement puis se détende dès que les rainures 5 atteignent le niveau du support. Au-dessus des rainures 5, deux petits becs d'appui permettent de limiter l'enfoncement de l'agrafe 2 dans le support 1. Au-dessus des rainures 5, les deux parois du "V" forment un réceptacle 6. Ce réceptacle à la forme d'une cupule ou vase c'est à dire qu'à ce niveau les branches de "V" forment des excroissances 7. Au-dessus du réceptacle 6, l'agrafe présente une ouverture tronconique 8 destinée à faciliter le guidage du verrou 3. La pointe ou nez du "V" 2 détermine un logement interne 9.

Le verrou 3 présente quant à lui une forme complémentaire de celle de l'intérieur du "V" c'est à dire, de bas en haut une pointe 19 surmontée par une partie 16 de section transversale plus importante que celle de la pointe 19 et une partie 18 qui sera insérée dans l'ouverture 8. De préférence, le verrou 3 est fermé à sa partie supérieure par une surface 13 qui constitue, soit un cache lorsque l'agrafe est employée seule ou une partie d'une pièce recouvrant la partie comprenant l'agrafe 2.

Les figures 1 à 3 représentent la fixation par agrafage de la pièce 2 sur le support. A l'origine, les éléments occupent la position représentée sur la figure 1 et, dans un premier temps comme cela apparaît sur la figure 2, la pièce 2 est insérée dans le support 1. Lors de son insertion, les bords du support 1 pénètrent à l'intérieur des rainures 5 et contraignent celles-ci latéralement (flèche F1) ce qui réduit l'angle d'ouverture du "V". La pièce 2 est ainsi maintenue par élasticité des flancs du "V" à l'intérieur de l'ajour la. Mais ce pincement n'assure que le maintien en position de la patte ou agrafe 2.

L'opération suivante consiste à insérer le verrou 3 dans l'agrafe 2. Au cours de cette insertion, la pointe 19 du verrou pénètre dans le logement 9 et cette pénétration provoque un écartement des branches 2 qui bloquent les rainures 5 contre les bords de l'ajour la. Cette pression (flèche F2) provient notamment de la forme en coin du verrou 16 et du fait que les dimensions transversales de celui-ci sont légèrement supérieures à celles de l'intérieur du "V" au repos. L'ensemble est ainsi solidement fixé. Le démontage s'effectue dans l'ordre inverse de celui du montage c'est à dire, dans un premier temps on extrait le verrou 3 de l'agrafe 2, après quoi l'agrafe 2 peut être extraite du support 1.

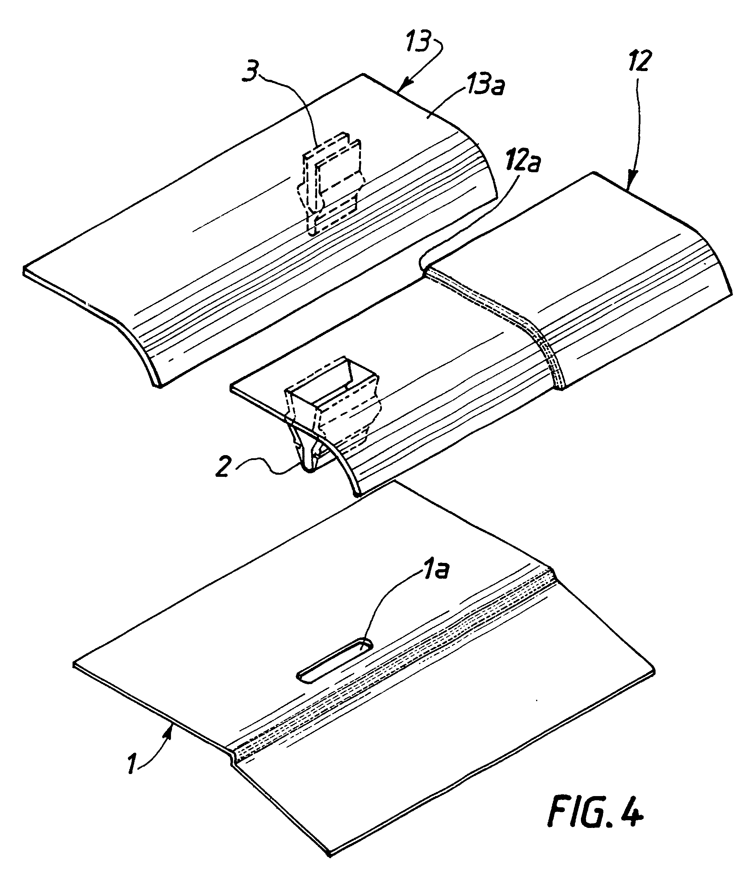

Comme cela apparaît sur la figure 4, sur laquelle on retrouve le support 1, une première pièce 12 devant être fixée sur le support 1 et une deuxième pièce 13 qui d'une part, recouvre partiellement la pièce 12 et peut éventuellement s'encastrer par son bord 13a dans le bord 12a de celle-ci. La ou les agrafes 2 et le ou les verrous 3 doivent, bien entendu, se trouver dans la région de recouvrement puisque la fixation des deux pièces sur le support 1 implique, comme indiqué précédemment, une pénétration du verrou 3 dans l'agrafe 2.

Toutefois, le même dispositif de fixation peut être utilisé aux secondes extrémités des pièces 12 et 13 (non représentées). Sur ces extrémités qui n'apparaissent pas sur la figure, il est possible de fixer la pièce 12 et la pièce 13 directement sur le support avec des agrafes 2, ces agrafes 2 étant verrouillées par des pièces 3 indépendantes dont la partie supérieure est recouverte par un cache. On obtient ainsi une fixation étanche aisément démontable et remontable, la fixation et le démontage ne demandant que deux pressions ou tractions successives.

Dans le cas ou l'on doit fixer deux pièces se recouvrant partiellement les agrafes 2 sont moulées avec la pièce 12 lors du moulage de celle-ci. Dans la zone de recouvrement, le verrou 3 de la pièce 13 est également moulé avec la pièce. Cette disposition évite d'avoir à faire appel à des composants séparés.

Il va de soi que de nombreuses variantes peuvent être apportées, notamment par substitution de moyens techniques équivalents, sans sortir pour cela du cadre de l'invention, pour autant que l'invention demeuré telle que définie dans les revendications.

## Revendications

1. Agrafe de fixation d'une pièce (12) sur un support (1) présentant au moins un ajour (la), la pièce (12) comprenant au moins des moyens d'agrafage (2) sur le support (1) présentant la forme d'une patte en "V" en saillie vers le bas et présentant une partie d'extrémité en nez (4), chaque branche du "V" (2) présentant une rainure (5) destinée à entourer le bord de l'ajour (la) formé dans le support (1), l'agrafe de fixation comprenant des moyens de blocage de la patte (2) dans le support (1) présentant la forme d'une patte (3), ces moyens comprenant une partie d'extrémité en pointe (19) pour s'engager dans le nez (4) de la patte en "V" **caractérisé en ce que** les rainures (5) sont proches du nez (4) de la patte en "V", chaque branche du "V" (2) comprenant une excroissance (7) formée vers l'extérieur du "V" relativement plus éloignée du nez (4) que la rainure (5), les excroissances (7) des deux branches du "V" formant un réceptacle (6) en forme de cupule, l'agrafe de fixation comprenant un verrou (16) de largeur supérieure à la largeur au repos du réceptacle (6) et venant s'engager dans ce réceptacle (6).

2. Dispositif de fixation sur un support (1) présentant un ajour (la) d'un ensemble de deux pièces (12, 13) se recouvrant partiellement, comprenant des moyens d'agrafage (2) de la première pièce sur le support (1) et des moyens d'agrafage (3) de la deuxième pièce (13) sur la première pièce (12), la première pièce (12) comprenant au moins une patte (2) en "V" en saillie vers le bas et présentant une partie d'extrémité en nez (4), chaque branche du "V" (2) présentant une rainure (5) destinée à entourer le bord de l'ajour (la) formé dans le support (1), les moyens d'agrafage (3) de la deuxième pièce (13) sur la première pièce (12) présentant la forme d'une patte solidaire de la deuxième pièce (13), ces moyens comprenant une partie d'extrémité en pointe (19) venant s'engager dans le nez (4) de la patte en "V", **caractérisé en ce que** les rainures (5) sont proches du nez (4) de la patte en "V", chaque branche du "V" (2) comprenant une excroissance (7) formée vers l'extérieur du "V" relativement plus éloignée du nez (4) que la rainure (5), les excroissances (7) des deux branches du "V" formant un réceptacle (6) en forme de cupule, l'agrafe de fixation comprenant un verrou (16) de largeur supérieure à la largeur au repos du réceptacle (6) et venant s'engager dans ce réceptacle (6).

3. Dispositif selon la revendication 2, **caractérisé en ce que** l'intérieur du "V" de la patte (2) de la première pièce (12) présente une entrée tronconique (8) présentant des première et seconde extrémités opposées respectivement relativement plus éloignée et relativement plus proche du nez (4), le diamètre de la première extrémité étant supérieur au diamètre de la seconde extrémité, et le diamètre de la seconde extrémité étant inférieur à la largeur maximum au repos du réceptacle (6).

4. Dispositif selon la revendication 3, **caractérisé en ce que** la patte (3) est de forme complémentaire à celle de l'intérieur du "V" de la première pièce, avec des dimensions transversales supérieures.

## Patentansprüche

1. Befestigungsklemme für ein Teil (12) auf einem Träger (1), der mindestens einen Durchbruch (1a) aufweist, wobei das Teil (12) mindestens ein Klemmmittel (2) auf dem Träger (1) umfasst, das die Form eines "V"- förmigen Halters aufweist, der nach unten vorspringt und einen Endteil mit Nase (4) aufweist, wobei jeder Schenkel des "V" (2) eine Nut (5) aufweist, die dazu vorgesehen ist, den Rand des im Träger (1) ausgebildeten Durchbruchs (1a) zu umgeben, wobei die Befestigungsklemme Feststellmittel für den Halter (2) im Träger (1) umfasst, die die Form eines Halters (3) aufweisen, wobei diese Mittel einen Endteil mit Spitze (19) zum Eingreifen an der Nase (4) des "V"-förmigen Halters umfassen, **dadurch gekennzeichnet, dass** die Nuten (5) nahe der Nase (4) des "V"-förmigen Halters sind, wobei jeder Schenkel des "V" (2) eine zur Außenseite des "V" ausgebildete Ausstülpung (7) umfasst, die relativ weiter von der Nase (4) entfernt ist als die Nut (5), wobei die Ausstülpungen (7) der beiden Schenkel des "V" eine Aufnahme (6) in Form einer Schale bilden, wobei die Befestigungsklemme einen Riegel (16) umfasst, der breiter ist als die entspannte Breite der Aufnahme (6) und in diese Aufnahme (6) eingreift.

2. Befestigungsvorrichtung auf einem Träger (1), der einen Durchbruch (1a) in einer Anordnung von zwei Teilen (12, 13) aufweist, die sich teilweise überdecken, umfassend Klemmmittel (2) des ersten Teils auf dem Träger (1) und Klemmmittel (3) des zweiten Teils (13) auf dem ersten Teil (12), wobei das erste Teil (12) mindestens einen "V"-förmigen Halter (2) umfasst, der nach unten vorspringt und einen Endteil mit Nase (4) aufweist, wobei jeder Schenkel des "V" (2) eine Nut (5) aufweist, die dazu vorgesehen ist, den Rand des im Träger (1) ausgebildeten Durchbruchs (1a) zu umgeben, wobei die Klemmmittel (3) des zweiten Teils (13) auf dem ersten Teil (12) die Form eines mit dem zweiten Teil (13) verbundenen Halters aufweisen, wobei diese Mittel ein Endteil mit Spitze (19) aufweisen, das in die Nase (4) des "V"-förmigen Halters eingreift, **dadurch gekennzeichnet, dass** die Nuten (5) nahe der Nase (4) des "V"-förmigen Halters liegen, wobei jeder Schenkel des "V" (2) eine zur Außenseite des "V" gebildete Ausstülpung umfasst, die relativ weiter von der Nase (4) entfernt ist als die Nut (5), wobei die Ausstülpungen (7) der beiden Schenkel des "V" eine Aufnahme (6) in Form einer Schale bilden, wobei die Befestigungsklemme einen Riegel (16) umfasst, der breiter ist als die entspannte Breite der Aufnahme (6) und in diese Aufnahme (6) eingreift.

3. Befestigungsvorrichtung nach Anspruch 2, **dadurch gekennzeichnet, dass** das Innere des "V" des Halters (2) des ersten Teils (12) einen kegelstumpfförmigen Eingang (8) aufweist, der gegenüberliegende erste und zweite Enden aufweist, die respektive relativ weiter entfernt und relativ näher an der Nase (4) sind, wobei der Durchmesser des ersten Endes größer ist als der Durchmesser des zweiten Endes und der Durchmesser des zweiten Endes kleiner ist als die entspannte Maximalbreite der Aufnahme (6).

4. Befestigungsvorrichtung nach Anspruch 3, **dadurch gekennzeichnet, dass** der Halter (3) eine zur Form des Inneren des "V" des ersten Teils komplementäre Form, mit größeren Querabmessungen aufweist.

## Claims

1. Fastening device of a piece (12) on a support (1) presenting at least one slot (1a), the piece (12) comprising at least some fastening methods (2) on the support (1) in the shape of an offset "V" lug towards the bottom and presenting a nose shaped extremity (4), each branch of the "V" (2) presenting a groove (5) intended to surround the edge of the slot (1a) formed in the support (1), the fastening device comprising locking methods of the lug (2) in the support (1) in the shape of a paw (3), these means comprising a pointed extremity (19) to engage itself in the nose (4) of the lug (3) **characterized in that** the grooves (4) are close to the nose (4) of the "V" shaped lug, each branch of the "V" (2) comprising a growth (7) formed towards the outside of the "V" relatively further from the nose (4) than the groove (5), the growths (7) of the two branches of the "V" forming a cup shaped receptacle (6) , the fastening device comprising a lock (16) of a width superior to the width at rest of the receptacle (6) and engages into this receptacle (6).

2. Fastening device on a support (1) presenting a slot (1a) of an assembly of two pieces (12, 13) partially overlapping, comprising fastening methods (2) of the first piece on the support (1) and fastening methods (3) of the second piece (13) on the first piece (12), the first piece (12) comprising at least an offset "V" shaped lug (2) towards the bottom and presenting a nose shaped extremity (4), each branch of the "V" presenting a groove (5) intended to surround the edge of the slot (1a) formed in the support (1), the fastening methods (3) of the second piece (13) on the first piece (12) presenting a paw shape interdependent of the second piece (13), these methods comprising a pointed extremity (19) engaging itself in the nose (4) of the "V" shaped lug, **characterized in that** the grooves (5) are close to the nose (4) of the "V" shaped lug, each branch of the "V" (2) comprising a growth (7) formed towards the outside of the "V" relatively further from the nose (4) than the groove (5), the growths (7) of the two branches of the "V" forming a cup shaped receptacle (6), the fastening device comprising a lock (16) of a width superior to the width at rest of the receptacle (6) and engaging itself in this receptacle (6).

3. Device according to claim 2, **characterized in that** the inside of the "V" of the lug (2) of the first piece (12) presents a truncated entrance (8) presenting first and second extremities respectively opposite and relatively further apart and closer to the nose (4), the diameter of the first extremity being superior to the diameter of the second extremity, and the diameter of the second extremity being inferior to the maximum width of the receptacle (6) at rest.

4. Device according to claim 3, **characterized in that** the lug (3) is of a shape complementary to the shape of the inside of the "V" of the first piece, with superior transverse dimensions.
